# EUROPÄISCHE PATENTSCHRIFT

(11) **EP 3 126 693 B1**
(45) Veröffentlichungstag und Bekanntmachung des Hinweises auf die Patenterteilung: **26.02.2020**
(21) Anmeldenummer: 15720197.1
(22) Anmeldetag: 19.03.2015
(51) Int. Cl.: F16D 13/72, F16D 21/06, F16D 13/70

(54) **DIREKT BETÄTIGBARE KUPPLUNG MIT BELÜFTUNGSGEOMETRIE**
DIRECTLY ACTUATED CLUTCH WITH VENTILATION GEOMETRY
EMBRAYAGE À ACTIONNEMENT DIRECT ET À GÉOMÉTRIE DE VENTILATION

(30) Priorität: 04.04.2014 DE 102014206490
(43) Veröffentlichungstag der Anmeldung: 08.02.2017
(73) Patentinhaber: Schaeffler Technologies AG & Co. KG, 91074 Herzogenaurach (DE)
(72) Erfinder: HELLGOTH, Rene, 77815 Bühl (DE); DAIKELER, René, 77880 Sasbach (DE)
(86) Internationale Anmeldenummer: PCT/DE2015/200170
(87) Internationale Veröffentlichungsnummer: WO 2015/149785

(56) Entgegenhaltungen:
- EP-A2- 1 783 388
- DE-A1- 3 507 988
- DE-A1- 10 148 428
- DE-A1- 10 338 558
- DE-A1-102011 017 380
- US-A- 4 667 794

## Beschreibung

Die Erfindung betrifft eine (vorzugsweise direkt betätigte) Reibkupplung / Reibungskupplung für einen Antriebsstrang eines Kraftfahrzeuges, wie einen PKW, LKW, Bus oder landwirtschaftlichen Nutzfahrzeug, mit einer, zum Ein- und Auskuppeln der Reibkupplung, gegenüber einer Druckplatte und einer Kupplungsscheibe verschiebbaren Anpressplatte und mit einem, die Anpressplattenverschiebestellung beeinflussenden, drehfest mit der Anpressplatte verbundenen Betätigungselement, welches Betätigungselement zumindest einen Fluidumlenkabschnitt aufweist, der in einem Betriebszustand der Kupplung, zur Kühlung der Anpressplatte, der Druckplatte und/oder der Kupplungsscheibe ein Kühlfluid in das Innere der Kupplung einleitet und somit einen Kühlfluidstrom innerhalb der Kupplung erzeugt (und / oder verstärkt).

Direkt betätigte Kupplungen, etwa direkt betätigbare Doppelkupplungen, sind bereits aus dem Stand der Technik bekannt. Beispielsweise offenbart die DE 10 2011 013 475 A1 eine Doppelkupplung mit einem ersten und einem zweiten Federelement, wobei das erste Federelement zumindest teilweise, bevorzugt vollständig radial innerhalb eines radial äußeren Randes eines ersten Reibbereiches angeordnet ist und/oder das zweite Federelement zumindest teilweise, bevorzugt vollständig, radial innerhalb eines radial äußeren Randes eines zweiten Reibbereiches angeordnet ist. Diese Doppelkupplung zeichnet sich durch das sogenannte Vier-Platten-Design aus, das heißt jede Kupplung der Doppelkupplung verfügt über eine ihre individuell zugeordnete Anpress- und Gegenplatte / Druckplatte.

Des Weiteren sind Fluidumlenkabschnitte auch in trockenen Kupplungen bereits bekannt, wie dies beispielsweise in der DE 36 02 716 A1 offenbart ist. Diese Reibungskupplung ist als eine trockene Einfachkupplung ausgestaltet und weist ein separat am Gehäuse montiertes Bauteil mit Luftleitschaufeln auf. Eine vergleichbare Ausgestaltung einer Reibungskupplung ist in der DE 33 04 670 A1 offenbart.

Eine weitere Lüftergeometrie als Fluidumlenkabschnitt und als integraler Teil eines Schwungrades bzw. einer Gegenplatte / Druckplatte ist weiterhin in der DE 101 10 897 A1 offenbart.

Aus der DE 103 38 558 A1 sind weiterhin Vorrichtungen und deren Verwendung zum Betrieb eines Kraftfahrzeuges offenbart, wobei in Verbindung mit den Figuren 44 bis 48 und Fig. 55 ein Doppelkupplungsgetriebe mit Kühlkanälen an der Druckplatte und am Schwungrad offenbart ist.

Eine Doppelreibungskupplung für Schlepper, Geräteträger und ähnliche Fahrzeuge offenbart darüber hinaus die DE 1 294 228, wobei eine Kupplungsscheibe einer Zapfwelle mit Lüfterschaufeln versehen ist (bzw. aus dem inneren Bereich der Kupplungsscheibe herausgebogen ist).

DE 10 2011 017380 liefert ein weiteres Beispiel einer gattungsgemäßen Reibkupplung.

Somit ist zusammenfassend festzustellen, dass es bereits aus dem Stand der Technik bekannte Doppelkupplungen gibt, wobei im Betrieb dieser Kupplungen ein paarweise auftretender Luftwirbel, erzeugt wird. Dieser Luftwirbel führt tendenziell dazu, dass es zu einer Kühlung der an den Reibflächen der thermischen Massen, d.h. der Anpressplatte, der Druckplatte und / oder der Kupplungsscheibe, zu einem Abtransport einer bestimmten Wärmeenergiemenge kommt. Auch kann durch diesen Luftwirbel Abrieb aus dem Bereich der Reibflächen / Reibkontakte heraus befördert werden. Die als Tellerfedern ausgestalteten Betätigungselemente sind gleichzeitig besonders prädestiniert dafür, Fluidumlenkabschnitte auszubilden, da sie an einem axialen, verbrennungskraftmaschinenfernen Bereich neben den Reibflächen der Druckplatten, der Anpressplatten und der Kupplungsscheiben befindlich sind und daher Kühlfluid aus einem kühleren Bereich der Kupplung in Richtung der Druckplatten, Kupplungsscheiben und Anpressplatten einleiten können.

Die Herstellung dieser bereits bekannten Kupplungen ist jedoch relativ aufwändig und folglich kostenintensiv. Denn die aus dem Stand der Technik bekannten, die Fluidumlenkabschnitte aufweisenden Betätigungselemente sind als Tellerfedern ausgebildet und daher aufgrund ihrer relativ komplexen Geometrie und Funktionsweise oft als wärmebehandelte, gehärtete Bauteile ausgestaltet, die bei Betätigung der Kupplung zwischen zwei Stellungen hin und her schnellen. Die Fertigung dieser Tellerfedern, insbesondere der Tellerfederzungen mittels mehrerer spanender Bearbeitungsschritte, ist jedoch mit einem relativ hohen Aufwand verbunden. Auch die Fluidumlenkabschnitte an sich sind somit aufwändig auszuformen. Aufgrund der Materialeigenschaften der gehärteten Tellerfedern sind nur bedingt große Umformradien möglich, da Materialbeschädigungen zu vermeiden sind. Zudem hat es sich bei den bekannten Tellerfedern als Nachteil herausgestellt, dass diese ihre Schrägstellung beim Umschwenken von der eingekuppelten in die ausgekuppelte Stellung ändern. Dadurch ändert sich auch die relative Lage der Fluidumlenkabschnitte relativ zu den zu kühlenden thermischen Massen und auch der Verlauf des Kühlfluidstromes wird während des Betriebs verändert.

Es ist daher die Aufgabe der vorliegenden Erfindung, die aus dem Stand der Technik bekannten Nachteile zu beheben und auch direkt betätigbare Kupplungen zur Verfügung zu stellen, deren Herstellaufwand weiter reduziert wird und bei denen gleichzeitig die Kühlmittelzufuhr weiter verbessert werden soll.

Dies wird dadurch gelöst, dass das Betätigungselement als ein starres (d.h. formstabiles / unter normale auftretenden Betriebszuständen nicht elastisch verformbaren) Bauteil ausgestaltet ist.

Diese starre Ausgestaltung hat gegenüber der flexiblen, sich bei Umschalten zwischen der eingekuppelten und der ausgekuppelten Stellung verändernden Geometrie der Tellerfeder den Vorteil, dass sich das Betätigungselement bezüglich seiner Neigung beim Umschalten zwischen der eingekuppelten und der ausgekuppelten Stellung nicht verändert. Dadurch ist es nun möglich, das Kühlfluid insbesondere in axialer Richtung während des Betriebs der Verbrennungskraftmaschine stets gezielt in einen bestimmten Bereich in das Innere der Kupplung einzuleiten und dadurch einen reproduzierbaren Kühlfluidstrom innerhalb der Kupplung zu ermöglichen. Dadurch kann das Kühlfluid optimal an die Druckplatte, die Anpressplatte und / oder die Kupplungsscheibe herangeleitet werden und die Kühlleistung weiter gesteigert werden. Zudem, da das Betätigungselement starr ausgestaltet ist, ist es möglich, dieses auch kostengünstig herzustellen. Vorzugsweise ist das Betätigungselement aus einem weniger festen / niedrig festen Metallwerkstoff ausgestaltet, wodurch die Herstellung der Fluidumlenkabschnitte vereinfacht wird und die Reibkupplungen kostengünstiger herstellbar sind.

So ist es gemäß einer weiteren Ausführungsform vorteilhaft, wenn das Betätigungselement als Drucktopf ausgestaltet ist, der vorzugsweise mit einem ersten Bereich auf die Anpressplatte (zumindest in einer eingekuppelten Stellung) einwirkt und mit einem, gegenüber dem ersten Bereich (bezogen auf die Kupplungsdrehachse) in radialer Richtung weiter innen angeordneten, zweiten Bereich, mittels eines Nehmerzylinders betätigbar ist. Ein solcher Betätigungstopf kann etwa durch ein Tiefziehverfahren hergestellt werden, etwa aus einem Metallblech, wodurch die Herstellung noch kostengünstiger ist. Dieser Drucktopf ist vorzugsweise, zum Verschieben der Anpressplatte, in axialer Richtung verschiebbar gelagert.

Ist das Betätigungselement vorteilhafterweise aus einem kalt umformbaren Metallwerkstoff, vorzugsweise einem Stahl- oder einer Aluminiumlegierung, hergestellt, können die Fluidumlenkabschnitte kostengünstig mittels bekannter Umform- und / oder Stanztechniken hergestellt werden.

Ist das Betätigungselement weiterhin als Blechteil aus dem Metallwerkstoff ausgeführt, wird die Herstellung weiter vereinfacht.

Zweckmäßig ist es darüber hinaus auch, wenn der der zumindest eine Fluidumlenkabschnitt eine integral mit dem Betätigungselement ausgeführte Umlenkschaufel / Hutze / Schaufelgeometrie aufweist, wobei die Umlenkschaufel / Hutze / Schaufelgeometrie durch einen Umformvorgang, vorzugsweise durch einen Kaltumformvorgang, und / oder durch einen Stanzvorgang hergestellt ist. Dadurch kann der Fluidumlenkabschnitt mittels möglichst weniger Herstellvorgänge ausgeformt werden. Zur Ausgestaltung des Fluidumlenkabschnitts wird vorzugsweise ein Bereich des Betätigungselementes zunächst tiefgezogen und anschließend in einen Abschnitt dieses tiefgezogenen Bereiches eine Öffnung mittels eines Stanzvorgangs eingebracht, wodurch ein Durchgangsloch zwischen den beiden axialen Seiten des Betätigungselementes entsteht. Auch ist es nach einer besonders bevorzugten Ausführung möglich zuerst eine Öffnung, etwa mittels eines Stanzvorgangs in das Betätigungselement einzubringen und anschließend einen Randbereich dieser Öffnung tiefzuziehen / kalt umzuformen und damit die Umlenkschaufel auszubilden.

Erfindungsgemäß ist es, wenn zumindest die Druckplatte oder die Anpressplatte im Bereich einer mit der Kupplungsscheibe in der eingekuppelten Stellung (reibkraftschlüssig) verbundenen Reibfläche eine Nutgeometrie aufweist, die zur Verteilung des Kühlfluids, insbesondere in radialer Richtung, ausgestaltet ist. Etwa können diese Nutgeometrien als im Wesentlichen in radialer Richtung erstreckende Nuten ausgestaltet sein, die dafür sorgen, dass auch in der eingekuppelten Stellung, d.h. bei einem Anliegen der Reibflächen der Druckplatte und der Anpressplatte an der Kupplungsscheibe, eine Weiterleitung des Kühlfluids in radialer Richtung nach außen gewährt ist. Dadurch wird die Kühlleistung noch weiter verbessert.

Erfindungsgemäß ist es auch, wenn zumindest die Druckplatte oder die Anpressplatte (oder ein Schwungrad, das drehfest mit der Druckplatte verbunden ist) zumindest einen, das Kühlfluid umleitenden, zweiten Fluidumlenkabschnitt aufweist, und / oder dass sowohl die Druckplatte als auch die Anpressplatte jeweils zumindest einen, das Kühlfluid umleitenden, zweiten Fluidumlenkabschnitt aufweisen. Der zweite Fluidumlenkabschnitt kann dabei wiederum eine Umlenkschaufel / Hutze/ Schaufelgeometrie aufweisen und zur Weiterleitung des Kühlfluides dienen. Eine besonders präzise Einleitung des Kühlfluids in die Reibflächen zwischen der Druckplatte und der Anpressplatte sowie der Kupplungsscheibe ist dadurch möglich. Dadurch kann die Kühlleistung weiter verbessert werden.

Ist die Reibungskupplung weiterhin als eine zwei Teilkupplungen aufweisende Doppelkupplung ausgestaltet, wobei für jede Teilkupplung ein Betätigungselement vorgesehen ist, können auch Doppelkupplungen besonders effizient ausgeführt sein.

In diesem Zusammenhang ist es besonders von Vorteil, wenn ein erstes Betätigungselement einer ersten Teilkupplung und ein zweites Betätigungselement einer zweiten Teilkupplung jeweils zumindest einen Fluidumlenkabschnitt aufweisen, wobei sich das erste Betätigungselement abschnittsweise radial außerhalb des zweiten Betätigungselementes erstreckt. Dadurch kann dann von dem ersten Betätigungselement aus das Kühlfluid gezielt in Richtung des zweiten Betätigungselementes geleitet werden und bereits die Zuleitung des Kühlfluids radial nach innen umgesetzt werden, von wo aus dann das Kühlfluid gezielt zu den entsprechenden Druck-, Anpressplatten und Kupplungsscheiben weitergeleitet werden kann. Dadurch wird die Kühlung der Kupplung weiter verbessert.

Weiterhin ist es auch von Vorteil, wenn die Reibkupplung als trocken laufende Reibkupplung ausgestaltet ist, wobei sich dann eine besonders große Wärmemenge rasch durch den erzeugten Kühlfluidstrom (Kühlluftstrom) abführen lässt.

Erfindungsgemäß ist weiterhin auch ein System aus Reibkupplung und Getriebeglocke vorgesehen, wobei die Reibkupplung nach zumindest einer der oben genannten Ausführungsformen ausgestaltet ist, und wobei die benachbart zur Reibkupplung angeordnete Getriebeglocke mit mehreren, das Kühlfluid antreibenden und / oder umlenkenden (und vorzugsweise sich in radialer Richtung erstreckenden) Rippen ausgestaltet ist. Durch diese Rippen wird Kühlfluid zusätzlich durch die Getriebeglocke in Richtung der Betätigungselemente befördert, wodurch der Kühlfluidstrom noch gezielter und stärker ausgestaltbar ist.

Die Erfindung wird nun nachfolgend anhand von Figuren näher dargestellt, wobei verschiedene Ausführungsformen erläutert sind.

Es zeigen:

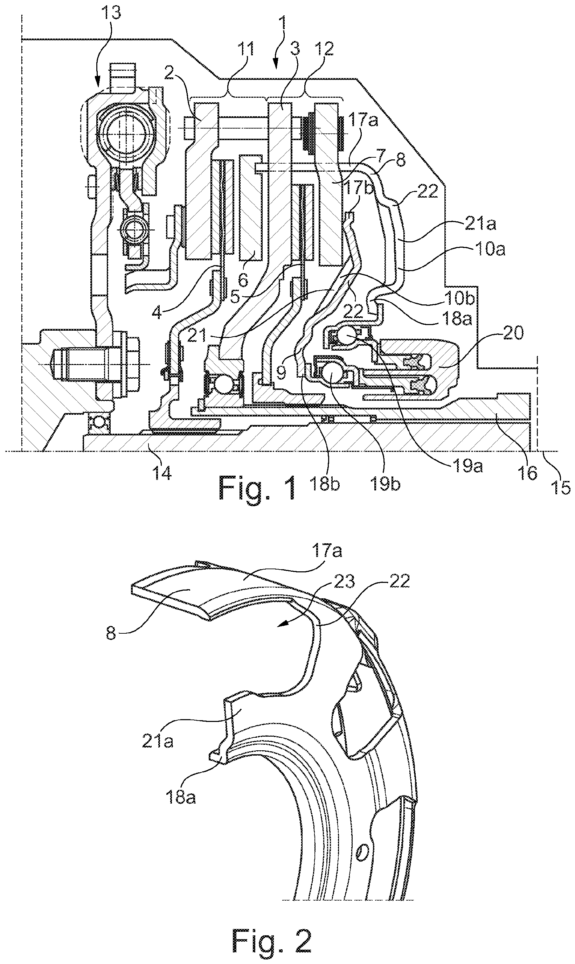

- Fig. 1: eine Längsschnittansicht einer erfindungsgemäßen, als Doppelkupplung ausgebildeten Reibkupplung nach einer ersten Ausführungsform, wobei die Reibkupplung in einem Bereich geschnitten ist, in dem je ein Fluidumlenkabschnitt in den beiden Betätigungselementen der Reibkupplung ausgestaltet ist,
- Fig. 2: eine geometrische Darstellung eines Teilkreissegmentes eines Betätigungselementes der erfindungsgemäßen Reibkupplung nach Fig. 1, wobei insbesondere die Ausbildung des zumindest einen Fluidumlenkabschnittes zu erkennen ist, und

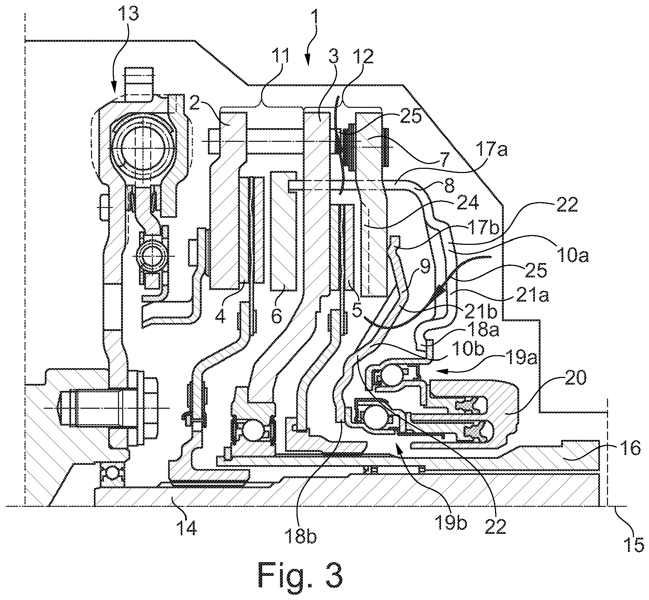

- Fig. 3: eine Längsschnittansicht einer erfindungsgemäßen, als Doppelkupplung ausgebildeten Reibkupplung nach einer zweiten Ausführungsform, wobei nun eine Anpressplatte der zweiten Teilkupplung eine Nutgeometrie aufweist und ein durch diese Nutgeometrie geleiteter Kühlfluidstrom eingezeichnet ist.

Die Figuren sind lediglich schematischer Natur und dienen nur dem Verständnis der Erfindung. Die gleichen Elemente sind mit denselben Bezugszeichen versehen.

In Fig. 1 ist eine erste Ausführungsform der erfindungsgemäßen Reibkupplung 1 (auch als Reibungskupplung bezeichnet) erkennbar. Die Reibkupplung 1 ist für einen Antriebsstrang eines Kraftfahrzeuges, etwa einem PKW, LKW, Bus oder landwirtschaftlichen Nutzfahrzeug ausgestaltet und dient dabei als trennbare Drehmomentübertragungseinrichtung zur Übertragung eines Drehmomentes zwischen einer Verbrennungskraftmaschine, etwa einem Otto- oder Diesel-Motor und einem Getriebe. Die Reibkupplung 1 ist hierbei als trocken laufende Reibkupplung 1 ausgestaltet, kann alternativ dazu jedoch als nass laufende Reibkupplung 1 ausgestaltet sein. Auch ist die Reibkupplung 1 als eine Doppelkupplung ausgestaltet und funktionierend, wie sie im Wesentlichen bereits aus der DE 10 2011 013 475 A1 bekannt ist. Der Offenbarungsgehalt der DE 10 2011 013 475 A1 soll daher als hierin integriert gelten.

Die Reibkupplung 1 weist prinzipiell eine, zum Ein- und Auskuppeln der Kupplung 1, gegenüber einer Druckplatte 2, 3 und einer Kupplungsscheibe 4, 5 hin und her verschiebbare Anpressplatte 6, 7 auf. Weiterhin weist die Reibkupplung 1 auch ein, die Anpressplattenverschiebestellung beeinflussendes, drehfest mit der Anpressplatte 6, 7 verbundenes Betätigungselement 8, 9 auf, welches Betätigungselement 8, 9 zumindest einen Fluidumlenkabschnitt 10 aufweist, der in einem Betriebszustand der Kupplung 1, nämlich bei eingeschalteter Verbrennungskraftmaschine, zur Kühlung der Anpressplatte 6, 7, der Druckplatte 2, 3 und / oder der Kupplungsscheibe 4, 5 ein Kühlfluid in das Innere der Kupplung 1 einleitet.

Wie weiterhin in Fig. 1 zu erkennen ist, da die Reibkupplung 1 als Doppelkupplung ausgestaltet ist, weist die Reibkupplung 2 voneinander unabhängige Teilkupplungen 11 und 12 auf.

Die erste Teilkupplung 11 weist dabei eine erste Druckplatte 2, die wiederum drehfest über einen als Zweimassenschwungrad ausgestalteten Drehschwingungsdämpfer 13 mit einer Kurbelwelle der Verbrennungskraftmaschine drehfest verbindbar ist, eine erste Kupplungsscheibe 4, die wiederum drehfest mit einer ersten Getriebeeingangswelle 14 verbindbar ist, sowie eine erste Anpressplatte 6 auf, die in axialer Richtung (d. h. entlang der Kupplungsdrehachse 15) der Reibkupplung 1 verschiebbar ist. Die erste Anpressplatte 6 ist wiederum drehfest mit der ersten Druckplatte 2 verbunden und gegenüber dieser in axialer Richtung verschiebbar. Auch die erste Kupplungsscheibe 4 ist in axialer Richtung verschiebbar gelagert und kann sowohl gegenüber der ersten Anpressplatte 6 als auch gegenüber der ersten Druckplatte 2 in axialer Richtung verschoben werden.

In einer eingekuppelten Stellung der ersten Teilkupplung 11 liegt die erste Anpressplatte 6 derart reibkraftschlüssig an der ersten Kupplungsscheibe 4 sowie der ersten Druckplatte 2 an, dass die erste Druckplatte 2 drehfest mit der ersten Kupplungsscheibe 4 verbunden ist. In dieser eingekuppelten Stellung liegen die erste Anpressplatte 6, die erste Kupplungsscheibe 4 sowie die erste Druckplatte 2 mittels ihrer Reibflächen reibkraftschlüssig aneinander an. Die erste Anpressplatte 6 drückt in dieser eingekuppelten Stellung die erste Kupplungsscheibe 4 in Richtung der ersten Druckplatte 2, um eine drehfeste Verbindung der ersten Kupplungsscheibe 4 mit der ersten Druckplatte 2 zu erzeugen.

In einer ausgekuppelten Stellung der ersten Teilkupplung 11 ist die erste Anpressplatte 6 wiederum beabstandet von der ersten Kupplungsscheibe 4 angeordnet, wodurch es zu einem Lösen der ersten Druckplatte 2 von der ersten Kupplungsscheibe 4 kommt und dadurch in dieser ausgekuppelten Stellung kein Drehmoment zwischen der ersten Druckplatte 2 und der ersten Kupplungsscheibe 4 übertragen wird.

Zum Verstellen zwischen der eingekuppelten Stellung und der ausgekuppelten Stellung der ersten Anpressplatte 6 ist wiederum ein erstes Betätigungselement 8 vorgesehen, welches erste Betätigungselement 8 als Drucktopf ausgestaltet ist und in axialer Richtung verschiebbar gelagert ist, gleichzeitig jedoch auch drehfest mit der ersten Anpressplatte 6 verbunden ist. Das erste Betätigungselement 8 ist starr, das heißt als starres und formstabiles Bauteil, ausgestaltet / ausgeformt und unterliegt während der Bewegung zwischen der eingekuppelten und der ausgekuppelten Stellung keinen merklichen elastischen Verformungen, die zu einem Verkippen / Verdrehen oder Verschieben des Fluidumlenkabschnitts 10 in radialer Richtung führen würde.

Die zweite Teilkupplung 12 der Doppelkupplung ist wiederum gemäß der ersten Teilkupplung 11 ausgestaltet und funktionierend. Auch die zweite Teilkupplung 12 weist eine Kupplungsscheibe 5, nachfolgend als zweite Kupplungsscheibe 5 bezeichnet, eine Druckplatte 3, nachfolgend als zweite Druckplatte 3 bezeichnet, eine Anpressplatte 7, nachfolgend als zweite Anpressplatte 7 bezeichnet, und ein Betätigungselement 9, nachfolgend als zweites Betätigungselement 9 bezeichnet, auf.

Die zweite Druckplatte 3 ist, wie auch die zweite Anpressplatte 7, drehfest mit der ersten Druckplatte 2 verbunden. Auch die zweite Anpressplatte 7 ist wiederum in axialer Richtung gegenüber der zweiten Kupplungsscheibe 5 sowie der zweiten Druckplatte 3 verschiebbar gelagert. Auch ist wiederum die zweite Kupplungsscheibe 5 in axialer Richtung zwischen der zweiten Druckplatte 3 und der zweiten Anpressplatte 7 angeordnet und gegenüber der zweiten Druckplatte 3 und der zweiten Anpressplatte 7 in axialer Richtung verschiebbar gelagert. Die Verschiebestellung der zweiten Anpressplatte 7 wird wiederum über das zweite Betätigungselement 9 bestimmt, welches zweite Betätigungselement 9 ebenfalls als Drucktopf ausgestaltet ist.

In einer eingekuppelten Stellung der zweiten Teilkupplung 12 drückt das zweite Betätigungselement 9 wiederum derart gegen die zweite Anpressplatte 7, so dass diese in Richtung der zweiten Kupplungsscheibe 5 sowie gegen die zweite Druckplatte 3 angedrückt ist. In der eingekuppelten Stellung der zweiten Teilkupplung 12 liegt die zweite Anpressplatte 7 derart reibkraftschlüssig an der zweiten Kupplungsscheibe 5 sowie der zweiten Druckplatte 3 an, dass die zweite Druckplatte 3 drehfest mit der zweiten Kupplungsscheibe 5 verbunden ist. In dieser eingekuppelten Stellung liegen die zweite Anpressplatte 7, die zweite Kupplungsscheibe 5 sowie die zweite Druckplatte 3 mittels ihrer Reibflächen reibkraftschlüssig aneinander an. Die zweite Kupplungsscheibe 5 ist wiederum mit einer zweiten Getriebeeingangswelle 16 eines hier nicht weiter dargestellten Getriebes verbindbar und im Betriebszustand auch mit dieser verbunden.

In einer ausgekuppelten Stellung der zweiten Teilkupplung 12 ist wiederum die zweite Anpressplatte 7 von der zweiten Kupplungsscheibe 5 beabstandet und außer reibkraftschlüssigem Kontakt mit der zweiten Kupplungsscheibe 5, wodurch die zweite Druckplatte 3 und die zweite Kupplungsscheibe 5 getrennt sind. Auch das zweite Betätigungselement 9 ist wiederum starr, das heißt als starres, formstabiles Bauteil, ausgestaltet.

Sowohl das erste Betätigungselement 8 als auch das zweite Betätigungselement 9 liegen mit einem radial äußeren Bereich 17a und 17b an der jeweiligen Anpressplatte 6, 7 an, um diese direkt zu betätigen / zu verstellen. Mit einem radial innen liegenden Bereich 18a, 18b, der bezogen auf die Kupplungsdrehachse 15 radial weiter innen als der äußere Bereich 17a, 17b angeordnet ist, liegt jedes der Betätigungselemente 8 und 9 an einem entsprechenden Betätigungslager 19a, 19b an, welches Betätigungslager 19a, 19b wiederum über einen Nehmerzylinder 20 verschiebbar ist, nämlich in axialer Richtung verschiebbar ist.

Wie in Zusammenwirkung mit Fig. 2 besonders gut zu erkennen ist, weist das erste Betätigungselement 8 an einem sich im Wesentlichen in radialer Richtung erstreckenden Wandbereich 21a den zumindest einen Fluidumlenkabschnitt 10, in Bezug auf das erste Betätigungselement 8 nachfolgend auch mit dem Bezugszeichen 10a versehen, auf. Der Übersichtlichkeit halber ist in der Figur lediglich ein Fluidumlenkabschnitt 10a ausgestaltet, es sind jedoch mehrere, vorzugsweise mindestens drei oder mindestens vier Fluidumlenkabschnitte 10a an dem ersten Betätigungselement 8 angeordnet, die in gleichen Abständen zueinander, entlang des Umfangs des ersten Betätigungselementes 8 verteilt angeordnet sind. Der Fluidumlenkabschnitt 10a weist eine Umlenkschaufel 22, auch als Hutze oder Schaufelgeometrie bezeichnet, auf, die durch eine lokale Ausformung im Wandbereich 21a des ersten Betätigungselementes 8 in axialer Richtung ausgeformt ist. Diese Umlenkschaufel 22 ist dabei mittels eines Kaltumformvorgangs ausgeformt. Dies ist möglich, da das erste Betätigungselement 8 aus einem kaltumformbaren Metallwerkstoff, nämlich einem kaltumformbaren Stahlwerkstoff, hergestellt ist. Alternativ dazu ist es auch möglich, das erste Betätigungselement 8 aus einer kaltumformbaren Aluminiumlegierung herzustellen. Weiterhin ist das erste Betätigungselement 8 als Blechteil ausgestaltet, wodurch es möglich ist, das erste Betätigungselement 8 ausschließlich mittels Umform- und Stanzvorgängen auszuformen.

Die Umlenkschaufel 22 wirkt zum Umleiten / Umlenken / Beschleunigen eines Kühlfluids in das Innere der Kupplung 1 mit einer Öffnung 23 zusammen. Die Öffnung 23 ist derart relativ zu der Umlenkschaufel 22 angeordnet, dass bei einem Drehen des ersten Betätigungselementes 8 in einer vorbestimmten Drehrichtung (in Fig. 1 betrachtet aus der Zeichnungsebene hinaus), im Betrieb der Verbrennungskraftmaschine, ein Kühlfluid, was hier bei der trocken laufenden Reibkupplung 1 Luft ist, in axialer Richtung von einer der ersten Anpressplatte 6 abgewandten Seite in das Innere der Reibkupplung 1 eingeleitet wird. Die Öffnung 23 kann dabei wiederum vorzugsweise mittels eines Stanzvorgangs hergestellt sein. Umlenkschaufel 22 und Öffnung 23 bilden somit den Fluidumlenkabschnitt 10a aus. Die Umlenkschaufel 22 ist integral mit dem Wandbereich 21 und, da dieser wiederum integral mit dem übrigen ersten Betätigungselement 8 ausgestaltet ist, auch mit dem ersten Betätigungselement 8 integral ausgestaltet. Auf einer radial außen liegenden Seite des Wandbereiches 21a des ersten Betätigungselementes 8 schließt der radial äußere Bereich 17a an, der sich im Wesentlichen in axialer Richtung erstreckt. An einer radial innen liegenden Seite des Wandbereichs 21a des ersten Betätigungselementes 8 schließt der radial innen liegende Bereich 18a des ersten Betätigungselementes 8 an.

Das zweite Betätigungselement 9 ist wiederum entsprechend des ersten Betätigungselementes 8 ausgestaltet. Die zuvor genannten Ausführungen treffen somit auch auf das zweite Betätigungselement 9 zu. Lediglich hinsichtlich der geometrischen Ausgestaltung des Wandbereiches 21b, des radial äußeren Bereichs 17b und des radial innen liegenden Bereichs 18b unterscheidet sich das zweite Betätigungselement 9 von dem ersten Betätigungselement 8.

Das zweite Betätigungselement 9 ist wiederum als Drucktopf, d.h. im Wesentlichen topfförmig ausgestaltet. Der Wandbereich 21b des zweiten Betätigungselementes 9 erstreckt sich in radialer Richtung im Wesentlichen schräg nach außen, wobei der radial äußere Bereich 17b in axialer Richtung, zu dem Wandbereich 21a des ersten Betätigungselementes 8 hin, relativ zu dem radial innen liegenden Bereich 18b versetzt angeordnet ist. Auch das zweite Betätigungselement 9 weist einen Fluidumlenkabschnitt 10 auf, der nachfolgend in Bezug auf das zweite Betätigungselement 9 auch mit dem Bezugszeichen 10b versehen ist. Der Fluidumlenkabschnitt 10b des zweiten Betätigungselementes 9 ist wie der zuvor beschriebene Fluidumlenkabschnitt 10a des ersten Betätigungselements 8 ausgestaltet. Auch das zweite Betätigungselement 9 weist mehrere, vorzugsweise mindestens drei oder mindestens vier entlang des Umfangs gleichmäßig verteilt angeordnete Fluidumlenkabschnitte 10b auf.

Das erste Betätigungselement 8 ist in dem Betriebszustand der Reibkupplung 1 derart relativ zu dem zweiten Betätigungselement 9 angeordnet, dass sich der radial äußere Bereich 17a des ersten Betätigungselementes 8 in radialer Richtung um das zweite Betätigungselement 9 herum erstreckt. Zudem ist auch ein in radialer Richtung gesehener Mittelpunkt des Fluidumlenkabschnittes 10a des ersten Betätigungselementes 8 in radialer Richtung außerhalb eines Mittelpunktes des Fluidumlenkabschnittes 10b des zweiten Betätigungselementes 9 angeordnet.

Wie wiederum in Verbindung mit Fig. 3 zu erkennen ist, ist gemäß einer weiteren, zweiten Ausführungsform der erfindungsgemäßen Reibkupplung 1 eine Nutgeometrie in zumindest einer der Anpressplatten 6, 7 integriert. Eine solche Nutgeometrie ist dabei vorzugsweise aus zumindest einer im Wesentlichen in radialer Richtung erstreckenden Nut 24 gebildet. Alternativ zu der Ausgestaltung ausschließlich in der zweiten Anpressplatte 7, wie in Fig. 3 dargestellt, ist eine solche Nutgeometrie auch in der ersten Anpressplatte 6 und / oder in der ersten Druckplatte 2 und / oder in der zweiten Druckplatte 3 ausgestaltbar. Auch ist eine Nutgeometrie in der ersten Kupplungsscheibe und / oder in der zweiten Kupplungsscheibe 5 integrierbar.

Eine solche Nutgeometrie weist dabei eine derart ausgestaltete Nut 24 auf, die vor allem in der eingekuppelten Stellung der jeweiligen Teilkupplung 11, 12 sowohl an einer radial innen liegenden Seite als auch an einer radial äußeren Seite zur Umgebung hin geöffnet ist, wodurch das Kühlfluid auch in der eingekuppelten Stellung, das heißt bei anliegenden Reibflächen zwischen den Platten 2, 3, 6, 7 an den Kupplungsscheiben 4, 5 Kühlfluid hindurchströmen kann und dadurch aktiv die Bauteile kühlen kann. Der durch die Nutgeometrie ermöglichte Fluidstrom / Kühlfluidstrom ist in Fig. 3 mit den Strömungspfeilen 25 gekennzeichnet.

Die beiden Druckplatte 2, 3 und die beiden Anpressplatten 6, 7 sind weiterhin ebenfalls allesamt oder teilweise / vereinzelt aus einem umformbaren / kaltumformbaren Metall (Stahl oder Aluminiumlegierung) hergestellt, wodurch die Nutgeometrie besonders einfach herstellbar ist.

Im Weiteren ist es auch möglich, weitere zweite Fluidumlenkabschnitte ebenfalls als Umlenkschaufeln und Öffnungen auszugestalten und diese an einer der Druckplatten 2, 3 der Anpressplatten 6, 7 und/oder der Kupplungsscheiben 4, 5 anzuordnen, wodurch die Strömung des Kühlfluids durch das Innere der Reibkupplung 1 weiter verbessert werden würde.

Erfindungsgemäß ist es auch möglich in einem System aus der Reibkupplung 1 und einer Getriebeglocke, in der Getriebeglocke mehrere, das Kühlfluid antreibende und / oder umlenkende Rippen anzubringen / auszuformen. Diese Rippen leiten dann vor dem Eintritt des Kühlfluids in die Reibkupplung 1 das Kühlfluid gezielt zu den Fluidumlenkabschnitten 10a und 10b hin.

In anderen Worten ausgedrückt werden mit der vorliegenden Erfindung Schaufelgeometrien 22 in Drucktöpfen 8, 9 integriert. Dies lässt sich einfach darstellen, da diese durch Stanzen und Umformen hergestellten Komponenten von vorneherein über Öffnungen 23 verfügen. Letztendlich wird der ansonsten ausgestanzte Bereich belassen und lediglich strömungsgünstig ausgestaltet. Der Umstand, dass bei der hier beschrieben Lösung die Lüftergeometrien (Fluidumlenkabschnitte 10a, 10b) Bestandteile von starren Betätigungselementen 8, 9 (Drucktöpfen) sind, führt im Vergleich zum Stand der Technik in vorteilhafter Weise dazu, dass diese sich relativ einfach darstellen lassen, da das Grundmaterial im Gegensatz zu dem bei einer Tellerfeder nicht wärmebehandelt werden muss und für die Anforderungen für Umformvorgänge optimiert sein kann. Des weiteren sorgt die Tatsache, dass die Lüftergeometrien (Fluidumlenkabschnitte 10a, 10b) in starren Elementen (im Gegensatz zu durchgeschwenkten Tellerfederzungen gemäß dem Stand der Technik) angeordnet sind, für konstante Querschnittsverhältnisse bzw. deren konstante Anströmung und damit reproduzierbare Durchströmungen.

Grundsätzlich können beide oder auch nur ein Drucktopf 8, 9 mit Schaufeln 22 (der Fluidumlenkabschnitte 10a, 10b) versehen sein. Eine Schaufelgeometrie 22 macht insbesondere beim äußeren Drucktopf (erstes Betätigungselement 8) Sinn, der im unmittelbaren Kontakt mit der stehenden Außenluft steht. Dabei kann durch geeignete Formgebung des Glockenbodens mit radial verlaufenden Rippen eine Steigerung der Durchlüftung erzielt werden.

Besonders vorteilhaft wird die Anordnung von Schaufeln 22 in Drucktöpfen 8, 9 mit Nuten 24 in den thermischen Massen im Bereich des Reibkontakts / der Reibflächen kombiniert. Dabei sorgt die Nutgeometrie vor allem auch bei geschlossenen Teilkupplungen 11, 12 für eine dauerhafte Durchströmung des Reibbereichs. Besonders vorteilhaft lässt sich diese Nutgeometrie bei umformtechnisch hergestellten, thermischen Massen aus Blech darstellen, da im Vergleich zu Gussmassen ein zusätzlicher Zerspanungsaufwand entfällt.

Die Kombination mit weiteren Lüfterkonturen in der Gegenplatte / Druckplatte 2, 3, ist möglich und für die aktive Durchlüftung der gesamten Kupplung 1 on Vorteil.

### Bezugszeichenliste

- 1: Reibkupplung
- 2: Druckplatte / erste Druckplatte
- 3: zweite Druckplatte
- 4: Kupplungsscheibe / erste Kupplungsscheibe
- 5: zweite Kupplungsscheibe
- 6: Anpressplatte / erste Anpressplatte
- 7: zweite Anpressplatte
- 8: Betätigungselement / erstes Betätigungselement
- 9: zweites Betätigungselement
- 10a: Fluidumlenkabschnitt des ersten Betätigungselementes
- 10b: Fluidumlenkabschnitt des zweiten Betätigungselementes
- 11: erste Teilkupplung
- 12: zweite Teilkupplung
- 13: Drehschwingungsdämpfer
- 14: erste Getriebeeingangswelle
- 15: Kupplungsdrehachse
- 16: zweite Getriebeeingangswelle
- 17a: radial äußerer Bereich des ersten Betätigungselementes
- 17b: radial äußerer Bereich des zweiten Betätigungselementes
- 18a: radial innen liegender Bereich des ersten Betätigungselementes
- 18b: radial innen liegender Bereich des zweiten Betätigungselementes
- 19a: Betätigungslager des ersten Betätigungselementes
- 19b: Betätigungslager des zweiten Betätigungselementes
- 20: Nehmerzylinder
- 21a: Wandbereich des ersten Betätigungselementes
- 21b: Wandbereich des zweiten Betätigungselementes
- 22: Umlenkschaufel
- 23: Öffnung
- 24: Nut
- 25: Strömungspfeil

## Patentansprüche

1. Reibkupplung (1) für einen Antriebsstrang eines Kraftfahrzeuges, mit einer, zum Ein- und Auskuppeln der Kupplung (1), gegenüber einer Druckplatte (2, 3) und einer Kupplungsscheibe (4, 5) verschiebbaren Anpressplatte (6, 7) und mit einem, die Anpressplattenverschiebestellung beeinflussenden, drehfest mit der Anpressplatte (6, 7) verbundenen Betätigungselement (8, 9), welches Betätigungselement (8, 9) zumindest einen Fluidumlenkabschnitt (10) aufweist, der in einem Betriebszustand der Kupplung (1), zur Kühlung der Anpressplatte (6, 7), Druckplatte (2, 3) und/oder Kupplungsscheibe (4, 5) ein Kühlfluid in das Innere der Kupplung (1) einleitet, und wobei das Betätigungselement (8, 9) als starres Bauteil ausgestaltet ist **dadurch gekennzeichnet, dass** zumindest die Druckplatte (2, 3) oder die Anpressplatte (6, 7) zumindest einen, das Kühlfluid umleitenden, zweiten Fluidumlenkabschnitt aufweist und/oder im Bereich einer mit der Kupplungsscheibe (4, 5) in der eingekuppelten Stellung verbundenen Reibfläche eine Nutgeometrie (24) aufweist, die zur Verteilung des Kühlfluids ausgestaltet ist.

2. Reibkupplung (1) nach Anspruch 1, **dadurch gekennzeichnet, dass** das Betätigungselement (8, 9) als Drucktopf ausgestaltet ist.

3. Reibkupplung (1) nach Anspruch 1 oder 2, **dadurch gekennzeichnet, dass** das Betätigungselement (8, 9) aus einem kalt umformbaren Metallwerkstoff hergestellt ist.

4. Reibkupplung (1) nach Anspruch 3, **dadurch gekennzeichnet, dass** das Betätigungselement (8, 9) als Blechteil aus dem Metallwerkstoff ausgeführt ist.

5. Reibkupplung (1) nach einem der Ansprüche 1 bis 4, **dadurch gekennzeichnet, dass** der zumindest eine Fluidumlenkabschnitt (10) eine integral mit dem Betätigungselement (8, 9) ausgeführte Umlenkschaufel (22) aufweist, wobei die Umlenkschaufel (22) durch einen Umformvorgang, vorzugsweise einem Kaltumformvorgang, und/oder einem Stanzvorgang hergestellt ist.

6. Reibkupplung (1) nach einem der Ansprüche 1 bis 5, **dadurch gekennzeichnet, dass** die Reibkupplung (1) als eine zwei Teilkupplungen (11, 12) aufweisende Doppelkupplung ausgestaltet ist, wobei je Teilkupplung (11, 12) ein Betätigungselement (8, 9) vorgesehen ist.

7. Reibkupplung (1) für einen Antriebsstrang eines Kraftfahrzeuges, mit einer, zum Ein- und Auskuppeln der Kupplung (1), gegenüber einer Druckplatte (2, 3) und einer Kupplungsscheibe (4, 5) verschiebbaren Anpressplatte (6, 7) und mit einem, die Anpressplattenverschiebestellung beeinflussenden, drehfest mit der Anpressplatte (6, 7) verbundenen Betätigungselement (8, 9), welches Betätigungselement (8, 9) zumindest einen Fluidumlenkabschnitt (10) aufweist, der in einem Betriebszustand der Kupplung (1), zur Kühlung der Anpressplatte (6, 7), Druckplatte (2, 3) und/oder Kupplungsscheibe (4, 5) ein Kühlfluid in das Innere der Kupplung (1) einleitet, und wobei das Betätigungselement (8, 9) als starres Bauteil ausgestaltet ist, **dadurch gekennzeichnet, dass** ein erstes Betätigungselement (8) einer ersten Teilkupplung (11) und ein zweites Betätigungselement (9) einer zweiten Teilkupplung (12) jeweils zumindest einen Fluidumlenkabschnitt (10a, 10b) aufweisen, wobei sich das erste Betätigungselement (8) zumindest abschnittsweise radial außerhalb des zweiten Betätigungselementes (9) erstreckt.

8. System aus Reibkupplung (1) und Getriebeglocke, wobei die Reibkupplung (1) nach dem Oberbegriff von Anspruch 1 ausgestaltet ist und wobei die benachbart zur Reibkupplung (1) angeordnete Getriebeglocke mit mehreren, das Kühlfluid antreibenden und / oder umlenkenden Rippen ausgestaltet ist.

## Claims

1. A friction clutch (1) for a drive train of a motor vehicle, comprising a thrust plate (6, 7) which is displaceable relative to a pressure plate (2, 3) and a clutch disc (4, 5) for engaging and disengaging the clutch (1), and an actuating element (8, 9) connected for conjoint rotation with the thrust plate (6, 7) and influencing the thrust plate displacement position, which actuating element (8, 9) has at least one fluid-deflecting section (10) which, in an operating state of the clutch (1), introduces a cooling fluid into the interior of the clutch (1) for cooling the thrust plate (6, 7), pressure plate (2, 3) and/or clutch disc (4, 5), and wherein the actuating element (8, 9) is designed as a rigid component, **characterised in that** at least the pressure plate (2, 3) or the thrust plate (6, 7) has at least one second fluid deflecting section which redirects the cooling fluid, and/or has a groove geometry (24) in the region of a friction surface connected to the clutch disc (4, 5) in the engaged position, which is designed to distribute the cooling fluid.

2. The friction clutch (1) according to claim 1, **characterised in that** the actuating element (8, 9) is designed as a pressure pot.

3. The friction clutch (1) according to claim 1 or 2, **characterised in that** the actuating element (8, 9) is produced from a cold-formable metal material.

4. The friction clutch (1) according to claim 3, **characterised in that** the actuating element (8, 9) is designed as a sheet metal part made of the metal material.

5. The friction clutch (1) according to one of claims 1 to 4, **characterised in that** the at least one fluid-deflecting section (10) has a deflecting vane (22) designed to be integral with the actuating element (8, 9), wherein the deflecting vane (22) is produced by a forming process, preferably a cold forming process, and/or a punching process.

6. The friction clutch (1) according to one of claims 1 to 5, **characterised in that** the friction clutch (1) is designed as a dual clutch having two component clutches (11, 12), each component clutch (11, 12) being provided with an actuating element (8, 9).

7. The friction clutch (1) for a drive train of a motor vehicle, comprising a thrust plate (6, 7) which is displaceable relative to a pressure plate (2, 3) and a clutch disc (4, 5) for engaging and disengaging the clutch (1), and an actuating element (8, 9) connected for conjoint rotation with the thrust plate (6, 7) and influencing the thrust plate displacement position, which actuating element (8, 9) has at least one fluid-deflecting section (10) which, in an operating state of the clutch (1), introduces a cooling fluid into the interior of the clutch (1) for cooling the thrust plate (6, 7), pressure plate (2, 3) and/or clutch disc (4, 5), and wherein the actuating element (8, 9) is designed as a rigid component, **characterised in that** a first actuating element (8) of a first component clutch (11) and a second actuating element (9) of a second component clutch (12) each have at least one fluid-deflecting section (10a, 10b), wherein the first actuating element (8) extends, at least in sections, radially outside of the second actuating element (9).

8. A system made from a friction clutch (1) and bell housing, wherein the friction clutch (1) is designed according to the preamble of claim 1 and wherein the bell housing arranged adjacent to the friction clutch (1) is designed with a plurality of ribs which drive and/or deflect the cooling fluid.

## Revendications

1. Embrayage à friction (1) pour une chaîne cinématique d'un véhicule, comprenant un plateau d'appui (6, 7) qui peut se déplacer en translation par rapport à un plateau de pression (2, 3) et à un disque d'embrayage (4, 5) pour embrayer et débrayer l'embrayage (1) et un élément d'actionnement (8, 9) qui agit sur la position de translation du plateau d'appui et qui est relié solidairement en rotation au plateau d'appui (6, 7), lequel élément d'actionnement (8, 9) présente au moins une partie de déviation de fluide (10) qui, dans un état de fonctionnement de l'embrayage (1), introduit un fluide de refroidissement dans l'espace intérieur de l'embrayage (1) afin de refroidir le plateau d'appui (6, 7), le plateau de pression (2, 3) et/ou le disque d'embrayage (4, 5) et l'élément d'actionnement (8, 9) étant conçu comme un composant rigide, **caractérisé en ce qu'**au moins le plateau de pression (2, 3) ou le plateau d'appui (6, 7) présente au moins une deuxième partie de déviation de fluide qui redirige le fluide de refroidissement et/ou présente, dans la région d'une surface de friction reliée au disque d'embrayage (4, 5) en position engagée, une géométrie de rainure (24) qui est conçue pour distribuer le fluide de refroidissement.

2. Embrayage à friction (1) selon la revendication 1, **caractérisé en ce que** l'élément d'actionnement (8, 9) est conçu comme un pot de pression.

3. Embrayage à friction (1) selon la revendication 1 ou 2, **caractérisé en ce que** l'élément d'actionnement (8, 9) est réalisé en un matériau métallique formable à froid.

4. Embrayage à friction (1) selon la revendication 3, **caractérisé en ce que** l'élément d'actionnement (8, 9) est conçu comme une pièce en tôle à partir du matériau métallique.

5. Embrayage à friction (1) selon l'une quelconque des revendications 1 à 4, **caractérisé en ce que** la ou les parties de déviation de fluide (10) présentent un déflecteur (22) conçu solidaire de l'élément d'actionnement (8, 9), le déflecteur (22) étant réalisé par un processus de formage, de préférence un processus de formage à froid et/ou un processus de poinçonnage.

6. Embrayage à friction (1) selon l'une quelconque des revendications 1 à 5, **caractérisé en ce que** l'embrayage à friction (1) est conçu comme un double embrayage présentant deux embrayages partiels (11, 12), un élément d'actionnement (8, 9) étant prévu pour chaque embrayage partiel (11, 12).

7. Embrayage à friction (1) pour une chaîne cinématique d'un véhicule, comprenant un plateau d'appui (6, 7) qui peut se déplacer en translation par rapport à un plateau de pression (2, 3) et à un disque d'embrayage (4, 5) pour embrayer et débrayer l'embrayage (1) et un élément d'actionnement (8, 9) qui agit sur la position de translation du plateau d'appui et qui est relié solidairement en rotation au plateau d'appui (6, 7), lequel élément d'actionnement (8, 9) présente au moins une partie de déviation de fluide (10) qui, dans un état de fonctionnement de l'embrayage (1), introduit un fluide de refroidissement dans l'espace intérieur de l'embrayage (1) afin de refroidir le plateau d'appui (6, 7), le plateau de pression (2, 3) et/ou le disque d'embrayage (4, 5) et l'élément d'actionnement (8, 9) étant conçu comme un composant rigide, **caractérisé en ce qu'**un premier élément d'actionnement (8) d'un premier embrayage partiel (11) et un deuxième élément d'actionnement (9) d'un deuxième embrayage partiel (12) ont chacun au moins une partie de déviation de fluide (10a, 10b), le premier élément d'actionnement (8) s'étendant au moins partiellement radialement à l'extérieur du deuxième élément d'actionnement (9).

8. Système d'embrayage à friction (1) et cloche de boîte de vitesses, l'embrayage à friction (1) étant configuré selon le préambule de la revendication 1 et la cloche de boîte de vitesses, disposée à côté de l'embrayage à friction (1), étant constituée d'une pluralité de nervures d'entraînement et/ou de déviation du fluide de refroidissement.
